# EUROPEAN PATENT SPECIFICATION

(11) **EP 0 406 832 B1**
(45) Date of publication and mention of the grant of the patent: **11.12.1996**
(21) Application number: 90112769.6
(22) Date of filing: 04.07.1990
(51) Int. Cl.: H04R 31/00, H04R 7/02, B29C 55/02, B29C 51/00, H04R 9/04

(54) **Method of manufacturing an acustic diaphragm**
Verfahren zur Herstellung einer akustischen Membran
Méthode pour la fabrication d'un diaphragme acoustique

(30) Priority: 05.07.1989 JP 171989/89; 28.08.1989 JP 218701/89
(43) Date of publication of application: 09.01.1991
(73) Proprietor: KABUSHIKI KAISHA KENWOOD, Shibuya-ku Tokyo (JP); ASAHI KASEI KOGYO KABUSHIKI KAISHA, Osaka (JP)
(72) Inventor: Yoshio, Sakamoto, Hachiohji Tokyo (JP); Syuhei, Ohta, Hachiohji Tokyo (JP); Yuji, Yabuki, Nobeoka, Myazaki (JP); Shigemitsu, Muraoka, Nobeoka, Myazaki (JP)
(74) Representative: Patentanwälte Leinweber & Zimmermann

(56) References cited:
- EP-A- 0 303 173
- GB-A- 1 338 703
- PATENT ABSTRACTS OF JAPAN vol. 013, no. 109 (E-727)15 March 1989 & JP-A-63 278 491
- PATENT ABSTRACTS OF JAPAN vol. 012, no. 014 (M-659)16 January 1988 & JP-A-62 174 129
- PATENT ABSTRACTS OF JAPAN vol. 003, no. 141 (E-153)21 November 1979 JP-A-54 118 817

## Description

### Field of the Invention

The present invention relates to an acoustic diaphragm which is molded by a resin film and a manufacturing method of such an acoustic diaphragm and, more particularly, to the improvement of a material of a diaphragm for a speaker, a diaphragm for a microphone, a center cap for a speaker, and a suspension for a speaker and a manufacturing method of the improved material.

### Related Art

An acoustic diaphragm system denotes a diaphragm, a voice coil bobbin, a center cap, and a suspension (edge, damper, and the like). When considering the diaphragm, as is well known, in recent years, a diaphragm obtained by molding a resin film has been used to solve the difficulty of mass production, drawbacks of material, and the like in the case of the diaphragm using a pulp. A film made of polyester, polypropylene, polyether-sulfone, polyamide, or the like is heat molded and worked into a predetermined shape.

On the other hand, when considering a conventional general heat molding work process of a film there are a vacuum molding process, a die molding process, and the like. The vacuum molding process is used as means for molding a thermoplastic film. As is well known, the film is heated to a temperature near a melting point, the film is absorbed by a vacuum force at a time point when the film was softened, and the softened film is adhered to the dies and molded.

However, the resin films which have been used hitherto have the following drawbacks.

That is, among the above conventional films, the number of films having a high propagation velocity of the sound (hereinafter, referred to as a "sound velocity") is small, an internal loss (hereinafter, referred to as "tan δ") is small, and the films easily resonate in a use frequency band, so that the number of films which deteriorate the characteristics is large. On the other hand, in many cases, a polypropylene film having a large tan δ or the like is used. However, the film having a large tan δ has drawbacks such that the sound velocity is low and a high band reproduction limit frequency is low.

The sound velocities and the value of tan δ of a polyamide film (hereinafter, referred to as a "PI film"), a polyphenylene-sulfide film (hereinafter, referred to as a "PPS film"), and the like which are referred to as what are called high property films in the conventional examples are as follows.
PI film A: Sound velocity 2200 m/sec, tan δ 0.015
PI film B: Sound velocity 1700 m/sec, tan δ 0.018
PPS film: Sound velocity 1900 m/sec, tan δ 0.010

Therefore, we have already proposed a substantially para-orientation aromatic polyamide film having a tensile elasticity of 600 kg/mm² or more (JP-B-57-17886, JP-A-62-37124, JP-A-62-174129, etc.).

However, in the films ( for example, the above PI film and the like) which are generally called high property (heat resistance) films and the substantially para-orientation aromatic polyamide film which has already been proposed by us, it is said that the melting point is located on a further higher temperature side than a decomposition point of 550°C. To heat those films, an efficiency is extremely low in the case of the present heating method. Even if the films having such characteristics were heated, they are not softened and it is extremely difficult to use the vacuum molding process.

Therefore, as another molding method, there has been tried a method whereby the film is molded by a die molding process which can expect the press deformation of a molding material (film). A glass point of the PI film or the like lies within a range from 180 to 350°C and in such a temperature range, the film can be relatively easily heated. Therefore, by properly setting the die temperature, the deformation resistance of the material remarkably decreases and the film can be easily molded. Therefore, the products of the PI film or the like have been realized by the above molding method.

On the other hand, although the material and its characteristics of a sheet, a film, or the like which is made of aromatic polyamide polymer lie in a wide range, as a conventional example in the die molding process or the like, as shown in an embodiment of JP-U-57-119986, there has been known an example in which an aromatic polyamide sheet (a sheet in which fibers made of meta-orientation aromatic polyamide are cut like chips and worked in an unwoven cloth state) called NOMEX (trade name) or the like is put into a hot water of 100°C for six minutes or longer and, thereafter, it is press molded like a cone by the dies which were heated and maintained at a temperature of about 200°C.

However, the above film of para-orientation aromatic polyamide, typically polyparaphenyleneterephthalamide (PPTA) does not have a glass point and as mentioned above, its melting point is set to a decomposition point of 550°C or higher, a strength and a modulus of elasticity are extremely higher and a distensibility is lower as compared with those of an unwoven cloth (trade name: NOMEX), a film, and the like which are made of meta-orientation aromatic polyamide. Therefore, such a film has characteristics such that a rigidity is extremely high, it is difficult to deform with a pressure, and the film is easily broken when the material was forcedly stretched. It is fairly difficult to use the heat die molding process and no product has been put into practical use. Actually, even if such a film was press molded by the dies (male and female dies) which were heated to about 200°C, the material is deformed when removing from the dies and the molded state is inadequate. The film is broken during the molding. The film is deformed after completion of the molding and the like. A yield is extremely bad. Therefore, there are many points to be solved when the products made of such a film are put into practical use.

To solve the above drawbacks, as a method for molding a diaphragm by a substantially para-orientation aromatic polyamide sheet, as shown in JP-A-63-278491, we have already proposed molding means other than the heat molding method. However, in the embodiments 1 and 2 according to such a method, the film is cut into a predetermined shape and the overlaid portions are coupled by an epoxy resin.

However, in the method of coupling the overlaid portions as mentioned above, the materials are discontinuous in the plane direction of the diaphragm. Therefore, the excellent acoustic characteristics of the material are once shut out in such discontinous portions, the sound is propagated to the epoxy resin having inferior acoustic characteristics, and the shapes of the coupled portions are complicated. Therefore, a reinforcement adhesive agent to prevent an noisy spurious vibration or the like must be coated to the portions other than the pure adhering portions. Thus, a costing amount of epoxy resin increases. The physical property of the diaphragm is dominated by the physical property (sound velocity: 2000 to 2500 m/sec) of the epoxy resin as a binder. There is a fear such that the inherent excellent characteristics of the PPTA film are deteriorated. Moreover, there are drawbacks such that many processing steps are needed for the coupling means, so that the mass productivity lacks and the like.

On the other hand, according to the embodiment 3 shown in JP-A-63-278491, a resin material is allowed to flow onto the surface of a conical die frame, a conical sheet is obtained by predetermined processes, a vertex portion of the conical sheet is cut, and thereby obtaining a cone type diaphragm. Therefore, although such a diaphragm is advantageous as compared with the embodiments 1 and 2 in terms of the performance, it is difficult to control a thickness of sheet and there is a problem such that it is difficult to obtain an enough strength as a diaphragm of the like.

JP-A-63278491 discloses a diaphragm for a speaker formed of a sheet made of para-oriented type aramide having a tensile elastic modulus of 600 kg/mm² or more, preferably 700 kg/mm² or more. Said sheet is made by a low temperature solution polymerization method.

EP-0 303 173 A1 discloses a sheet-form molded article composed of organic fiber and a process for producing the same. Said process includes a heat-treatment, which comprises holding the article between hot rolls and heating it continuously optionally with a compressive force.

### Summary of the Invention

It is the first object of the invention to solve the drawbacks of the conventional acoustic diaphragms mentioned above and to provide an acoustic diaphragm in which by using the para-orientation aromatic polyamide film, a sound velocity is extremely high and an internal loss is large.

The second object of the invention is to provide a method of manufacturing an acoustic diaphragm in which the excellent acoustic characteristics of the para-orientation aromatic polyamide film are not lost and the excellent mass productivity is derived.

According to the invention, there is provided a method of molding a film of para-orientation aromatic polyamide having a tensile elasticity of at least 600 kg/mm² and a density of less than 1.44 g/cm³ into an acoustic diaphragm part comprising the steps of: (a) providing female and male dies; (b) heating the female and male dies to at least 250°C; (c) setting the film of para-orientation aromatic polyamide between the heated female and male dies; (d) pressing the set film by the heated dies to form the acoustic diaphragm part; (e) cooling the dies to a proper temperature, such that the strength of the film is recovered, while maintaining said pressing; and (f) releasing the dies to remove the formed acoustic diaphragm part from the dies.

Preferably, the pressing speed is 15 to 20 mm/s. The acoustic diaphragm part may be a center cap or a suspension member.

According to the invention, said acoustic diaphragm part may be formed by laminating films of the same material.

As a diaphragm, a single member such as diaphragm, center cap, edge member, or the like can be obviously molded. For instance, it is also possible to integratedly mold two or more adjacent parts such as (voice coil bobbin and diaphragm), (diaphragm and center cap), (diaphragm and edge), or the like.

On the other hand, a diaphragm of a laminate structure can be also obtained by heat molding the para-orientation aromatic polyamide film after it was previously adhered by an adhesive agent.

Uniform products can be efficiently manufactured by using the para-orientation aromatic polyamide film such that although it has excellent acoustic characteristics, there is no application as a diaphragm because of the absence of a proper molding method. The diaphragm obtained as mentioned above has the excellent characteristics such that the sound velocity is at least 2500 m/sec or more, actually, 3000 m/sec or more, and the value of tan δ is 0.03.

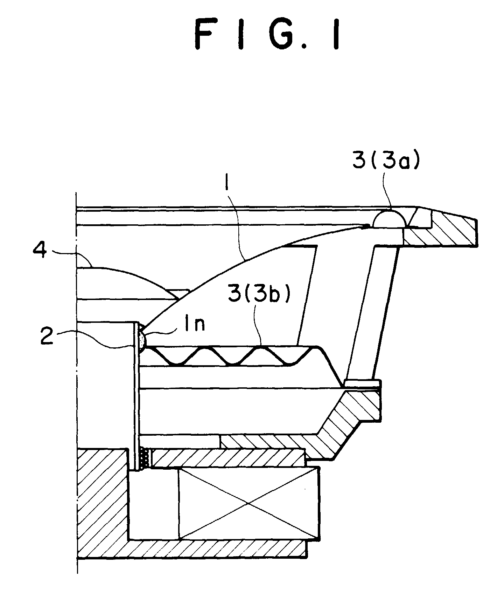

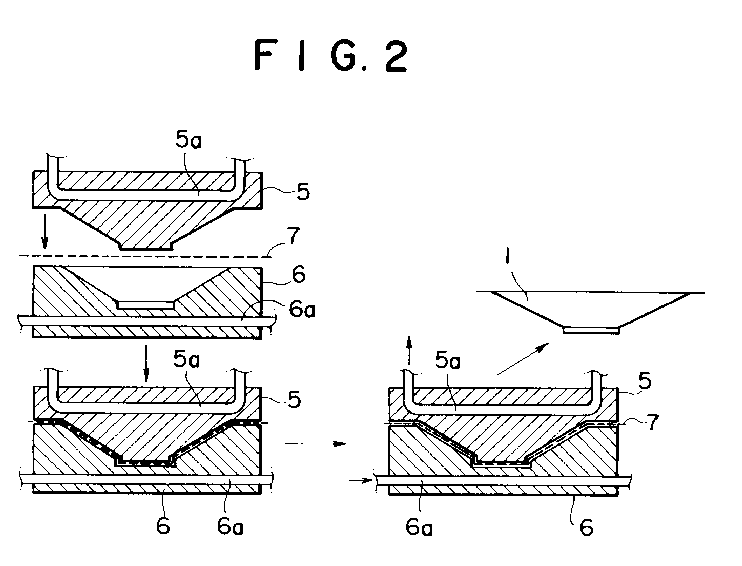

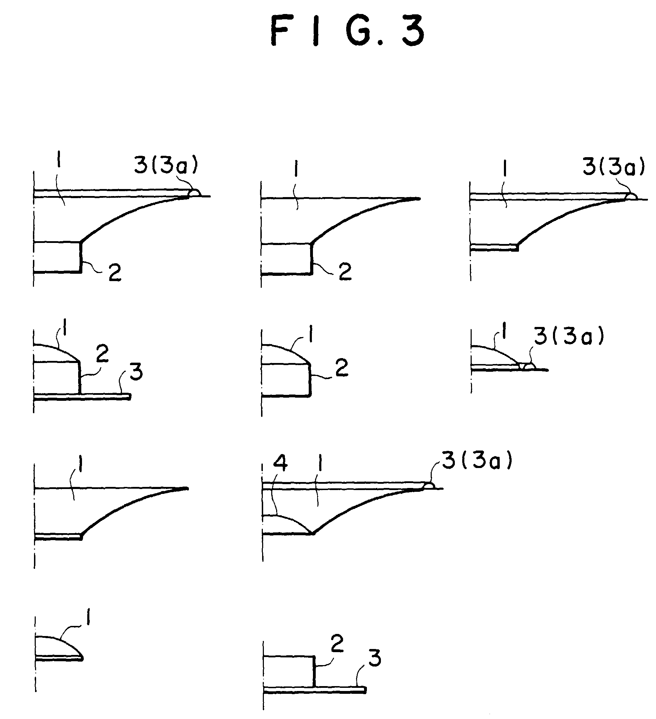

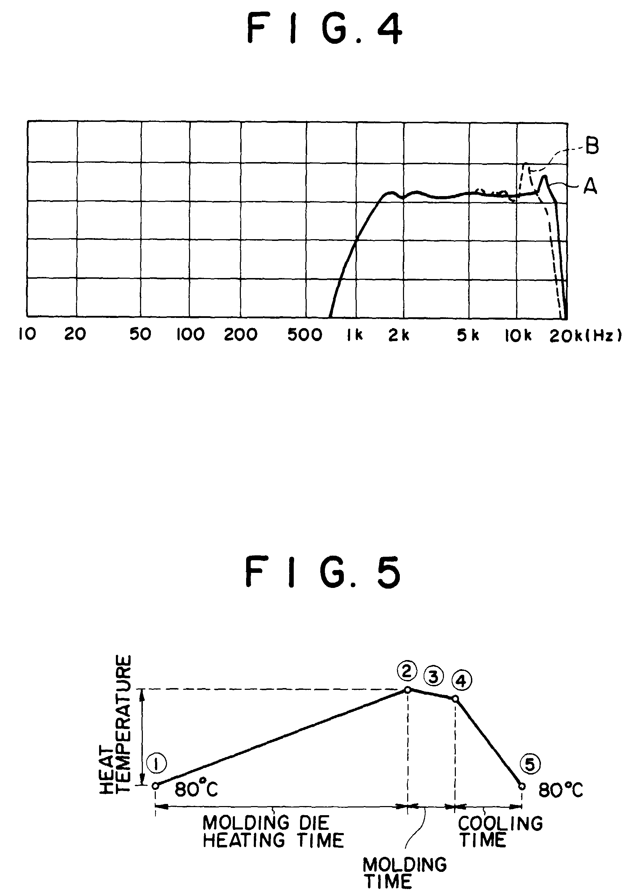

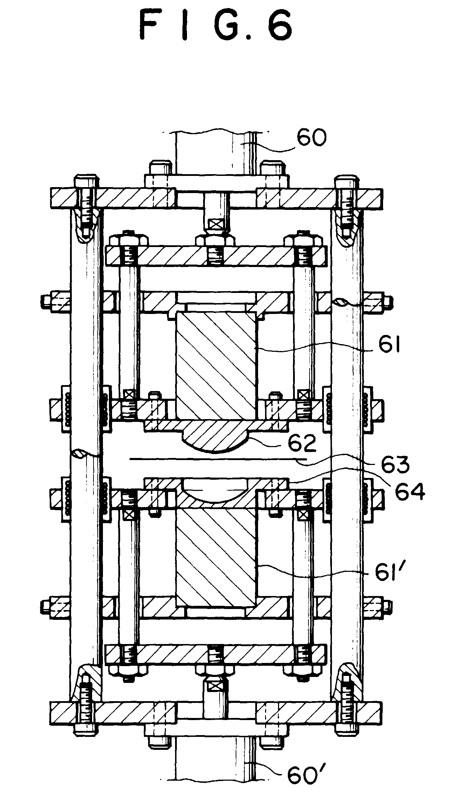

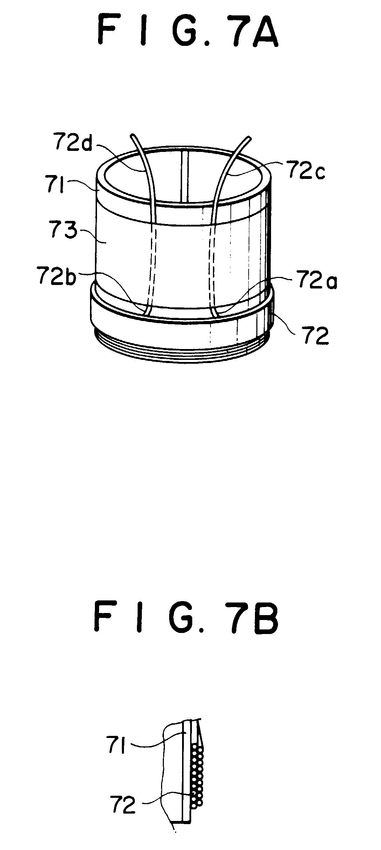

Fig. 1 is a cross sectional view of a main section for explaining a diaphragm of a speaker; Fig. 2 is a processing step diagram showing an embodiment of a manufacturing method according to the invention; Fig. 3 is a semicross sectional view showing various forms of acoustic diaphragms according to the invention; Fig. 4 is a frequency comparison characteristic graph between a speaker using the diaphragm obtained by the embodiment 1 and a speaker using a conventional resin film diaphragm; Fig. 5 shows the time schedule of the molding process; Fig. 6 is a cross sectional view of the molding system used in the present invention; and Fig. 7 shows a voice coil bobbin structure according to the present invention.

A resin film which is used in the invention is made of substantially para-orientation aromatic polyamide. Para-orientation aromatic polyamide denotes a polymer of a repetitive structure in which the para-position of aromatic ring or the position similar thereto is coupled by an amide radical. Generally, although PPTA is most frequently used, in order to further improve the moldability or the like, for instance, it is also possible to substitute p-phenylene radical by, for instance, 4, 4′-diphenylene, 1, 4′-naphthalene, 1, 5-naphthalene, 2, 6-naphthalene, 4, 4′-diphenylene-ether, 3, 4′-diphenylene-ether, or a substitution product of their halogen, alkyl, nitro, etc., or to introduce the above substituting group to the p-phenylene radical, or the like. On the other hand, poly (p-benzamide) can be also used.

The film which is used in the invention has a Young's modulus of 600 kg/mm² or more and has a distensibility of 20% or more from a viewpoint of the breakage, molding stability, or the like upon press molding and also has a density of 1.44 g/cm³ or less. Therefore, such a film is advantageous for acoustic characteristics. To adjust the surface property, moldability, and characteristics, it is also possible to add a filler such as glass fiber, carbon fiber, carbon particles, carbon whiskers, talc, silica, etc. and voids can be also contained by using an expanding method or the like.

The resin film which is used in the invention can be manufactured by, for instance, the methods disclosed in JP-A-57-17886, JP-A-62-37124, JP-A-62-174129, and the like.

An embodiment of the invention will be described on the basis of Figs. 1 to 4. Fig. 1 is a cross sectional view of a main section of a speaker. In the diagram, reference numeral 1 denotes a diaphragm; 2 a voice coil bobbin; 3 a suspension such as edge 3a, damper 3b, and the like; and 4 a center cap. The above components relate to a diaphragm as an object of the invention.

### Embodiment 1

Embodiment 1 relates to an example in the case of molding the cone-shaped diaphragm 1. As shown in Fig. 2, press dies comprising a male die 5 and a female die 6 having coolant passages 5a and 6a, respectively, are used. The female die 6 is heated to 380°C or higher and the male die 5 is heated to 280°C or higher, respectively. A PPTA film 7 in which a thickness is set to about 60 µm, a Young's modulus is set to 1020 kg/mm², a distensibility is set to 34%, a density is set to 1.402 g/cm³, a sound velocity is set to 3400 m/sec, and tan δ is set to 0.038 was press molded at a pressing speed of about 15 to 20 mm/sec. The PPTA chemical formula is as below.

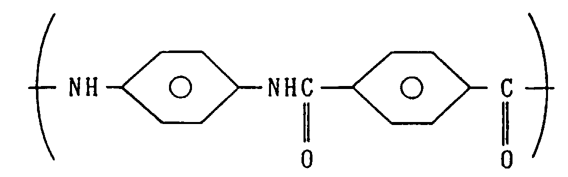

In the case of the PPTA film which is used in the embodiment, when the dies are set into the above heating state, the breakage distensibility is increased by about 50%. However, since the breakage strength decreases by about 80%, the selection of the pressing speed is important. On the other hand, since the molded film just after completion of the pressing operation is very fragile, the strength of the film is recovered by cooling the dies 5 and 6 to about 80°C by flowing a cooling water through the coolant passages 5a and 6a in the pressing state. That is, after the dies in the pressing state were cooled, by releasing the dies, the film is molded into a desired diaphragm shape. After the film was removed, the surplus portion is eliminated by a trimming work, so that the cone-shaped diaphragm 1 was obtained.

Although the embodiment shown in Fig. 2 relates to the example in which the cone-shaped diaphragm is manufactured, a dome-shaped diaphragm can be also manufactured. As shown in Fig. 3, on the other hand, at least two or more parts among the diaphragm 1, voice coil bobbin 2, edge 3a, damper 3b, and center cap 4 can be also integratedly molded by the foregoing press molding means.

### Embodiment 2

The PPTA films can be also laminated to two or more layers and molded. In the embodiment 2, two PPTA in which a distensibility is set to 23%, and a density is set to 1.405 g/cm³ were adhered with an adhesive agent and laminated. The adhesive agent was coated by using a well-known coating machine, so that the adhesive agent could be extremely thinly and uniformly coated. The drawback as in the conventional example such that the diaphragm is influenced by the physical property of the adhesive agent is eliminated. The performance could be improved by considering the material of the adhesive agent.

The physical property of the laminate film is such that the sound velocity is set to 3550 m/sec and tan δ is set to 0.045. The value of tan δ could be increased without making the sound velocity slow. After the diaphragm had been molded by the laminate product, a part of the diaphragm was cut out and its physical property was measured. Thus, not so large change was found out as compared with the physical property of the laminate product before molding.

### Embodiment 3

As another example of the laminating method, after films were molded into a predetermined diaphragm shape, the molded products can be also laminated. As such an embodiment, a rubber system adhesive agent is coated by a spray onto one surface of one of two molded products which were molded into a diaphragm shape by using the PPTA films in which a Young's modulus is set to 1200 kg/mm², a distensibility is set to 24%, and a density is set to 1.400 g/cm³. A solvent is volatilized. After that, the two molded products are adhered by the heat pressing process by a heat reactivating method. A part of the laminate diaphragm was cut out and the physical property was measured. Thus, the sound velocity was set to 3000 m/sec and tan δ was set to 0.075. Although the sound velocity was slightly made slow, tan δ could be increased.

As is well known, since the physical property is improved by evaporation depositing metal or the like onto the front or back surface of the film, by using the film which was subjected to such a process, it can be also molded. Or, after the film was molded, metal or the like can be also evaporation deposited.

Although only the diaphragm has been molded as mentioned above in the embodiment 1, the center cap 4 mentioned above in the embodiment 1, edge 3a, or suspension such as damper 3b or the like can be also obviously formed.

Although it is a general way to change the conditions such as a molding temperature and the like in accordance with the molding shape, when a film thickness is set to about 25 µm, the film can be also molded even if the male die 5 is set to about 250°C.

Fig. 4 is a frequency comparison characteristic graph between a speaker A using the diaphragm obtained by the embodiment ① and a speaker B of a diameter of three inches using the conventional diaphragm made of a PI resin film. It will be understood that the characteristics in the high frequency band of the speaker A of the diaphragm according to the invention were remarkably improved.

The time schedule of molding process as shown in Fig. 5 is conducted through a molding system as shown in Fig. 6. The molding dies 62 and 64 are heated from starting point 1 by heater blocks 61 and 61' during 3 - 25 minutes. At point ②, cylinders 60 and 60' are operated to press film 63 with dies 62 and 64. At point ③, the die is clamped. The cooling step follows the 2 - 10 second molding. The combination of dies and film is cooled by passing coolant through passages 5a and 6a provided in the dies of Fig. 2 or by blowing cooled air to the dies during about 1 minute. After the dies and film have been cooled to about 80°C, the clamping of dies is released so that the pressed film can be taken out.

According to the acoustic diaphragm of the invention, the film made of para-orientation aromatic polyamide has extremely excellent acoustic characteristics in which the sound velocity is set to 3000 m/sec or higher and tan 6 is set to 0.03 or more. When considering the diaphragm, the performance is extremely superior to that of the diaphragm by the conventional resin film molding. Particularly, the diaphragm having an enough larger tan 6 than that of the conventional resin film can be obtained. Therefore, the stiffness of the joint portion with the voice coil bobbin, that is, the portion which is generally called a neck portion 1n can be increased. Therefore, it is difficult to cause a peak in the high reproducing frequency on the characteristics. The sound velocity is faster than that of the conventional resin film diaphragm. That is, since the elasticity is high, the flexural oscillation in the high frequency band is reduced, and the divisional vibration can be eventually prevented. The flatness in the high frequency band can be easily obtained. The characteristics could be remarkably improved as will be also obviously understood from the comparison characteristic graph of Fig. 4.

On the other hand, by molding only the center cap and attaching it to a conventional speaker diaphragm or the like, the sound quality can be adjusted. Further, as a suspension, since it has an extremely high creep resistance, it can be used as a high-power speaker suspension.

As a manufacturing method, since the diaphragm of the invention can be fundamentally molded by the resin film molding method which has conventionally been used, the products can be remarkably easily mass produced. Therefore, a diaphragm of a higher property than the member such as a conventional diaphragm or the like can be easily manufactured.

Referring to Fig. 7A and Fig. 7B, the PPTA film is cut into strips. The strips are put together into a cylinder bobbin 71 by bonding the strips at their edges. Coil wire 72 is wound on the bobbin 71 and leads 72a - 72c and 72b - 72d of coil wire 72 are fixed by rolling up paper sheet 73. The PPTA film used in this embodiment has the thickness of 50 or 55 µm, tensile elasticity of 1150 or 1460 kg/mm², density of 1,400 or 1,405 g/cm³, acoustic velocity of 3580 or 3720 m/sec and tan δ of 0.038 or 0.400. The voice coil bobbins fabricated in the above have a very high rigidity and thus can prevent the spurious vibration at the connection part of the voice coil bobbin and diaphragm.

While the diaphragm is fabricated through the molding process as illustrated in the above embodiments, a voice coil bobbin is produced from a film of para-orientation aromatic polyamide, preferably PPTA without using a molding process.

## Claims

1. A method of molding a film of para-orientation aromatic polyamide having a tensile elasticity of at least 600 kg/mm² and a density of less than 1.44 g/cm³ into an acoustic diaphragm part
comprising the steps of:
(a) providing female and male dies;
(b) heating the female and male dies to at least 250°C;
(c) setting the film of para-orientation aromatic polyamide between the heated female and male dies;
(d) pressing the set film by the heated dies to form the acoustic diaphragm part;
(e) cooling the dies to a proper temperature, such that the strength of the film is recovered, while maintaining said pressing; and
(f) releasing the dies to remove the formed acoustic diaphragm part from the dies.

2. A method according to claim 1, wherein the pressing speed is 15 to 20 mm/s.

3. The method according to claims 1 or 2, wherein said acoustic diaphragm part is a center cap.

4. The method according to claims 1 or 2, wherein said acoustic diaphragm part is a suspension member.

5. The method according to claims 1, 2, 3 or 4, wherein said acoustic diaphragm part is formed by laminating films of the same material.

## Patentansprüche

1. Verfahren zur Formung einer Folie aus einem para-orientierten aromatischen Polyamid, die eine Zugelastizität von mindestens 600 kg/mm² und eine Dichte von weniger als 1,44 g/cm³ hat, zu einem Teil einer akustischen Membran,
umfassend die Schritte:
(a) Schaffen einer Matrizen- und einer Patrizenform;
(b) Erwärmen der Matrizen- und der Patrizenform auf mindestens 250 °C;
(c) Einlegen der Folie aus para-orientiertem aromatischem Polyamid zwischen die erwärmte Matrizen- und Patrizenform;
(d) Pressen der eingelegten Folie durch die erwärmten Formen, um den Teil der akustischen Membran zu formen;
(e) Kühlen der Formen auf eine geeignete Temperatur, so daß die Festigkeit der Folie wiedergewonnen wird, während die Pressung aufrechterhalten wird;
(f) Öffnen der Formen, um den geformten Teil der akustischen Membran aus den Formen zu entnehmen.

2. Verfahren nach Anspruch 1, bei welchem die Pressgeschwindigkeit 15 bis 20 mm/s beträgt.

3. Verfahren nach Anspruch 1 oder 2, bei welchem der Teil der akustischen Membran eine Mittelkappe ist.

4. Verfahren nach Anspruch 1 oder 2, bei welchem der Teil der akustischen Membran eine Aufhängungselement ist.

5. Verfahren nach Anspruch 1, 2, 3 oder 4, bei welchem der Teil der akustischen Membran durch Laminieren von Folien desselben Materials geformt wird.

## Revendications

1. Méthode de moulage d'un film d'un polyamide aromatique à para-orientation ayant une élasticité à la traction d'au moins 600 kg/mm² et une densité de moins de 1,44 g/cm³ en une pièce de diaphragme acoustique.
comprenant les étapes de :
(a) prévoir des matrices femelle et mâle;
(b) chauffer les matrices femelle et mâle à au moins 250°C;
(c) ajuster le film de polyamide aromatique à para-orientation entre les matrices femelle et mâle chauffées;
(d) presser le film ajusté par les matrices chauffées pour former la pièce de diaphragme acoustique;
(e) refroidir les matrices à une température appropriée telle que la résistance du film soit récupérée tout en maintenant ladite pression; et
(f) libérer les matrices pour retirer la pièce de diaphragme acoustique formée des matrices.

2. Méthode selon la revendication 1, où la vitesse de pression est de 15 à 20 mm/s.

3. Méthode selon les revendications 1 ou 2, où ladite pièce de diaphragme acoustique est un capuchon central.

4. Méthode selon les revendications 1 ou 2, où ladite pièce de diaphragme acoustique est un organe de suspension.

5. Méthode selon les revendications 1, 2, 3 ou 4, où ladite pièce de diaphragme acoustique est formée en superposant des films du même matériau.
